# EUROPEAN PATENT APPLICATION

(11) **EP 4 001 021 A1**
(43) Date of publication of application: **25.05.2022**
(21) Application number: 21208010.5
(22) Date of filing: 12.11.2021
(51) Int. Cl.: B60R 16/03, B60L 50/16, B60L 58/18, H02J 7/00, H02J 7/14, B60R 16/04, B62K 5/01

(54) **ALL-TERRAIN VEHICLE AND METHOD FOR SUPPLYING POWER TO ALL-TERRAIN VEHICLE**

(30) Priority: 13.11.2020 CN 202022636104 U
(71) Applicant: Segway Technology Co., Ltd., Changzhou City, Jiangsu 213100 (CN)
(72) Inventor: ZHANG, Liang, Changzhou City, 213100 (CN)
(74) Representative: Sticht, Andreas

(57) **Abstract**

An all-terrain vehicle and a method for supply power to an all-terrain vehicle is disclosed. The all-terrain vehicle includes a power supply system including a power source and an energy storage unit. The power source is configured to supply power for a first device and a second device of the all-terrain vehicle. When a voltage of the power source is higher than a voltage of the energy storage unit, the energy storage unit is triggered to store electric energy, and when the power source supplies power to the first device and the second device and a voltage of the power source drops, the energy storage unit is triggered to release stored electric energy to the power source, and the electric energy released by the energy storage unit is supplied to the power source to increase an output voltage of the power source.

## Description

### TECHNICAL FIELD

The present application relates to the field of power source, in particular to an all-terrain vehicle, a power supply system for an all-terrain vehicle (ATV) and a method for supplying power to an all-terrain vehicle.

### BACKGROUND

An all-terrain vehicle contains a large number of electrical devices, some of which have high electric power. In the related art, when a power supply system for the all-terrain vehicle supplies power to the devices having high electric power, it may cause the voltage of the power supply system to be unstable, and cause loss/damage of some devices that require high stability of the power supply voltage.

### SUMMARY

In order to solve the related technical problems, embodiments of the present disclosure provide an all-terrain vehicle, a power supply system for an all-terrain vehicle, and a method for supplying power to the all-terrain vehicle.

The technical solution of the embodiments of the present application is realized as follows:

An embodiment of the present application provides an all-terrain vehicle, comprising: a frame; at least one seat arranged on the frame; a first device; a second device, a required electric power of the first device being greater than a required electric power of the second device; and the first device having a lower stability requirement for a power supply voltage than the second device; and a power supply system arranged behind the at least one seat, the power supply system comprising a power source and an energy storage unit; the power source being configured to supply power to the first device and the second device. When a voltage of the power source is higher than a voltage of the energy storage unit, the energy storage unit is triggered to store electric energy; and when the voltage of the power source is lower than the voltage of the energy storage unit, the energy storage unit is triggered to release the stored electric energy to the power source. And, when the power source supplies power to the first device and the second device and a voltage of the power source drops, the energy storage unit is triggered to release stored electric energy to the power source, and the electric energy released by the energy storage unit is supplied to the power source to increase an output voltage of the power source such that the output voltage of the power source satisfies the stability requirement of the second device for the power supply voltage.

An embodiment of the present application provides a method for supplying power to an all-terrain vehicle, the all-terrain vehicle comprising a power source and an energy storage unit, the power source being configured to supply power to a first device and a second device of the all-terrain vehicle, a required electric power of the first device being greater than a required electric power of the second device; and the first device having a lower stability requirement for a power supply voltage than the second device. The method comprises :
powering on the all-terrain vehicle, wherein a voltage of the power source is higher than a voltage of the energy storage unit after the all-terrain vehicle is powered on, such that the energy storage unit is triggered to store electric energy; determining whether the first device needs to be started; controlling the power source to supply power to the first device when it is determined that the first device needs to be started, wherein the voltage of the power source drops when the power source supplies power to the first device and the second device, and the drop in the voltage of the power source triggers the energy storage unit to release the stored electric energy to the power source to increase the output voltage of the power source, such that the output voltage of the power source satisfies the stability requirement of the second device for the power supply voltage.

An embodiment of the present application provides a power supply system for an all-terrain vehicle, including: a power source and an energy storage unit.

The power source is configured to supply power for a first device and a second device of the all-terrain vehicle; a required electric power of the first device is greater than a required electric power of the second device; and the first device has a lower stability requirement for a power supply voltage than the second device.

When the power source supplies power to the first device, a drop in a voltage of the power source triggers the energy storage unit to release stored electric energy, and the electric energy released by the energy storage unit is supplied to the power source to increase an output voltage of the power source such that the output voltage of the power source satisfies the stability requirement of the second device for the power supply voltage.

In one or more embodiments or the present disclosure, when the voltage of the power source is higher than a voltage of the energy storage unit, the energy storage unit is triggered to store the electric energy.

In one or more embodiments or the present disclosure, the all-terrain vehicle includes an electric generator configured to generate electric energy; and the electric energy generated by the electric generator is used to supply power to the power source.

In one or more embodiments or the present disclosure, the energy storage unit is connected in parallel with the power source.

In one or more embodiments or the present disclosure, the energy storage unit includes a capacitor.

In one or more embodiments or the present disclosure, the first device includes at least one of: a starter motor; an on-board air conditioner; an on-board audio; or a winch motor.

The starter motor is configured to start an engine of the all-terrain vehicle; the power source is specifically configured to supply power to the starter motor when the engine needs to be started; and the starter motor is further configured to operate and drive the engine to start after being supplied with power.

In one or more embodiments or the present disclosure, the second device includes at least one of: a vehicle control unit; an engine control unit; or a motor control unit.

An embodiment of the present disclosure further provides an all-terrain vehicle, including: a first seat and a second seat arranged in parallel, and the power supply system for the all-terrain vehicle according to any one of the above solutions; where a power source of the power supply system is arranged behind the first seat; and an energy storage unit of the power supply system is arranged behind the second seat.

In one or more embodiments or the present disclosure, a first partition is arranged between a rear part of the first seat and an engine, and the power source is arranged on the first partition; and a second partition is arranged between a rear part of the second seat and the engine, and the energy storage unit is arranged on the second partition.

In one or more embodiments or the present disclosure, the first seat is a driver seat; and the second seat is a passenger seat.

The power supply system for the all-terrain vehicle and the all-terrain vehicle are provided. The power supply system for the all-terrain vehicle includes the power source and the energy storage unit. The power source is configured to supply power for the first device and the second device of the all-terrain vehicle; a required electric power of the first device is greater than a required electric power of the second device; and the first device has a lower stability requirement for the power supply voltage than the second device. When the power source supplies power to the first device, a drop in the voltage of the power source triggers the energy storage unit to release the stored electric energy, and the electric energy released by the energy storage unit is supplied to the power source to increase the output voltage of the power source such that the output voltage of the power source satisfies the stability requirement for the power supply voltage of the second device. The all-terrain vehicle includes the power supply system for the all-terrain vehicle. In the solution of the embodiments of the present application, when the power source supplies power to the first device having high electric power and causes the voltage of the power source to drop, the energy storage unit discharges to increase the output voltage of the power source, so that the voltage supplied by the power source to the second device having the high stability requirement for the power supply voltage can maintain stability. In this way, the loss/damage of the second device of the all-terrain vehicle caused by large fluctuation of the power supply voltage when powering the all-terrain vehicle may be reduced, the service life of the second device may be prolonged, and the working efficiency of the power supply system for the all-terrain vehicle may be improved.

### BRIEF DESCRIPTION OF THE DRAWINGS

Fig. 1 is a schematic structural diagram of a power supply system for an all-terrain vehicle according to an embodiment of the present application;
Fig. 2 is a schematic structural diagram of another power supply system for the all-terrain vehicle system according to an embodiment of the present application;
Fig. 3 is a schematic diagram of a working flow of the power supply system for the all-terrain vehicle according to an embodiment of the present application; and
Fig. 4 is a schematic structural diagram of an all-terrain vehicle according to an embodiment of the present application.

### DETAILED DESCRIPTION OF EMBODIMENTS

The technical solution of the present application will be further described in detail below in conjunction with the accompanying drawings and embodiments.

Some devices in the all-terrain vehicle have high electric power, such as a starter motor, an on-board air conditioner, an on-board audio and a winch motor; at the same time, the all-terrain vehicle includes some devices having a high stability requirement for a power supply voltage, such as a vehicle control unit (VCU), an engine control unit (ECU) and a motor control unit (MCU). In related technologies, the same power source usually supplies power to all electrical devices. In some special scenarios (that is, when a user uses a device having high electric power), it may cause the power supply voltage output by the power source fluctuate greatly. Large fluctuation of the power supply voltage may cause loss/damage of the above devices having a high stability requirement for the power supply voltage, shorten the service life of the devices having a high stability requirement for the power supply voltage, and reduce the working efficiency of the power supply system for the all-terrain vehicle.

Based on this, in various embodiments of the present application, when the power source supplies power to the first device having high electric power and causes a drop in the voltage of the power source, the energy storage unit discharges to increase the output voltage of the power source, so that the voltage supplied by the power source to the second device having the high stability requirement for the power supply voltage maintains stability. In this way, the loss/damage of the second device of the all-terrain vehicle caused by large fluctuation of the power supply voltage when powering the all-terrain vehicle may be reduced, the service life of the second device may be prolonged, and the working efficiency of the power supply system for the all-terrain vehicle may be improved.

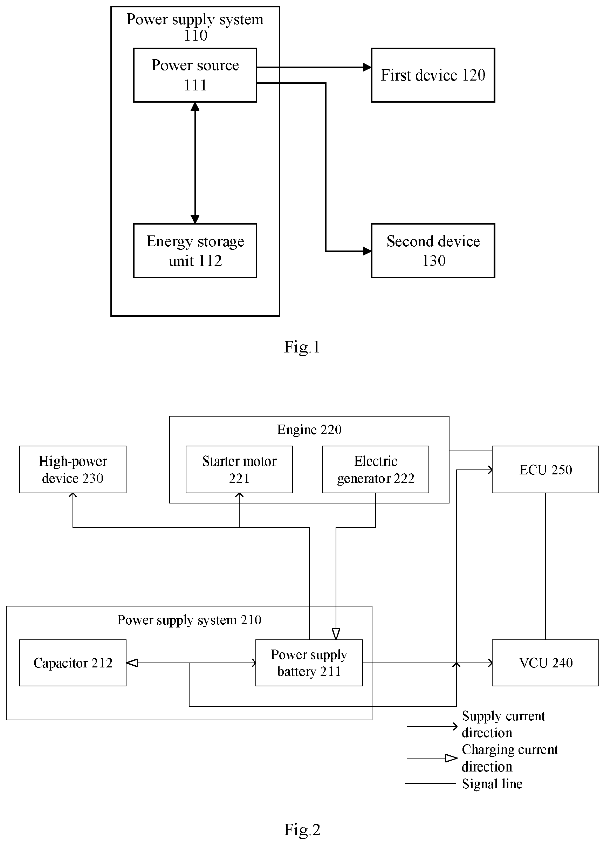

An embodiment of the present application provides a power supply system for an all-terrain vehicle. As shown in Fig. 1, an power supply system for the all-terrain vehicle 110 includes a power source 111 and an energy storage unit 112.

The power source 111 is configured to supply power for a first device 120 and a second device 130 of an all-terrain vehicle; a required electric power of the first device 120 is greater than a required electric power of the second device 130; and the first device 120 has a lower stability requirement for a power supply voltage of the first device 120 than the second device 130.

When the power source 111 supplies power to the first device 120, a drop in a voltage of the power source 111 triggers the energy storage unit 112 to release stored electric energy, and the electric energy released by the energy storage unit 112 is supplied to the power source 111 to increase an output voltage of the power source 111 such that the output voltage of the power source 111 satisfies the stability requirement of the second device 130 for the power supply voltage.

Here, when the voltage of the power source 111 is higher than a voltage of the energy storage unit 112, the energy storage unit 112 is triggered to store the electric energy; and when the voltage of the power source 111 is lower than the voltage of the energy storage unit 112, the energy storage unit 112 is triggered to release the stored electric energy. It can be seen that the energy storage unit 112 can balance voltage fluctuations generated by the power source 111 for the first device 120 and stabilize the output voltage of the power source 111. Therefore, it can avoid the loss/damage of the second device 130 caused by the fluctuation of the power supply voltage of the power source when the first device is used, ensure the stability of the power supply voltage output by the power source 111 to the second device 130, thereby prolonging the service life of the second device 130 and improving the working efficiency of the power supply system 110.

In practical applications, the energy storage unit 112 may be connected in parallel with the power source 111. The energy storage unit 112 may be realized by a capacitor.

In an embodiment, the first device 120 may include at least one of the following: a starter motor; an on-board air conditioner; an on-board audio; or a winch motor.

Here, the starter motor is configured to start an engine of the all-terrain vehicle; correspondingly, the power source 111 is specifically configured to supply power to the starter motor when the engine needs to be started; and the starter motor is operate and drive the engine to start after being supplied with power; after the engine is started, it operates and drives an electric generator of the all-terrain vehicle to generate electricity; the electric generator is configured to generate electric energy; and the electric energy generated by the electric generator is used to supply power to the power source 111.

In an embodiment, the second device 130 may include at least one of the following: a vehicle control unit; an engine control unit; or a motor control unit.

In practical applications, the second device 130 may further include any micro-control unit in the all-terrain vehicle, such as an instrument control unit (ICU), and an auxiliary power unit (APU); and the energy storage unit 112 is electrically connected to the power source.

In practical applications, the power source 111 may start or stop supplying power to the first device 120 based on a control signal sent by any micro-control unit included in the second device 130; that is, any micro-control unit included in the second device 130 may send a first signal to the power source 111 when it is determined that the first device 120 needs to be started, so as to control the power source 111 to start supplying power to the first device 120, and send a second signal to the power source 111 when it is determined that the first device 120 needs to be turned off, to control the power source 111 to stop supplying power to the first device 120. Exemplarily, in the case where the first device 120 includes the starter motor, any micro-control unit included in the second device 130 may determine whether the engine needs to be started by detecting the user's operation on the all-terrain vehicle; alternatively, any micro-control unit included in the second device 130 may, by detecting whether a state of charge (SOC) of the power source 111 is less than a first threshold (which may be set according to needs, such as 30%), determine whether the power source 111 needs to supply power, and when it is determined that the power source 111 needs to supply power, determine that the engine needs to be started. When the power source 111 supplies power to the starter motor, any micro-control unit included in the second device 130 may determine whether the engine is started by detecting a rotation speed of the engine, for example, when it is detected that the rotation speed of the engine is 0, any micro-control unit included in the second device 130 may determine that the engine is not started; as another example, when it is detected that the rotation speed of the engine has stabilized at a first value (which may be set according to needs, such as 2000 revolutions per second) within a first duration (which may be set according to needs, such as 5 milliseconds), it may determine that the engine is started; and after determining that the engine is started, any micro-control unit included in the second device 130 may determine that the starter motor needs to be turned off.

Exemplarily, in practical applications, after the above power supply system is arranged in the all-terrain vehicle, as shown in Fig. 2, the power supply system 210 may include a power supply battery 211 and a capacitor 212. The all-terrain vehicle may include an engine 220, a high-power device 230, a VCU 240, and an ECU 250. The engine 220 may include a starter motor 221 and an electric generator 222. The power supply battery 211 is configured to: supply power to the VCU 240 and the ECU 250; supply power to the high-power device 230 when the high-power device 230 is in use; and supply power to the starter motor 221 when the engine 220 needs to be started. The starter motor 221 is configured to operate and drive the engine 220 to start after being powered. After the engine 220 is started, it operates and drives the electric generator 222 to generate electricity. The electric energy generated by the electric generator 222 is used to supply power to the power supply battery 211. When the power supply battery 211 supplies power to the starter motor 221 and/or the high-power device 230, the voltage of the power supply battery 211 drops, and a system voltage of the power supply system 210 may also be pulled down instantaneously, causing (i.e., triggering) the capacitor 212 to release the stored electric energy, and the electric energy released by the capacitor 212 is supplied to the power supply battery 211 to increase an output voltage of the power supply battery 211. That is, the capacitor 212 may supply power to the power supply system 210 in a short time period, and the electric energy released by the capacitor 212 is supplemented to the power supply system 210 to balance the system voltage of the power supply system 210, thereby ensuring that the power supply voltage input by the power supply battery 211 to the VCU 240 and the ECU 250 maintains stability, avoiding the problem of unstable system voltage in the power supply system for the all-terrain vehicle in the related art when the high-power device 230 is used and the engine 220 is started, reducing the damage of the micro-control units such as the VCU 240 and the ECU 250 caused by the power supply system for the all-terrain vehicle when supplying power, improving the reliability and stability of the micro-control units such as the VCU 240 and the ECU 250 (that is, it is ensured that the micro-control units such as the VCU 240 and the ECU 250 can work stably and reliably), prolonging the service life of the micro-control units such as the VCU 240 and the ECU 250, thus improving the working efficiency of the power supply system for the all-terrain vehicle.

Here, it should be noted that the function of the power supply system 210 is equivalent to the function of the power supply system 110; the function of the power supply battery 211 is equivalent to the function of the above power source 111; the function of the capacitor 212 is equivalent to the above energy storage unit 112; the high-power device 230 and the starter motor 221 are equivalent to the first device 120; and the VCU 240 and the ECU 250 are equivalent to the second device 130.

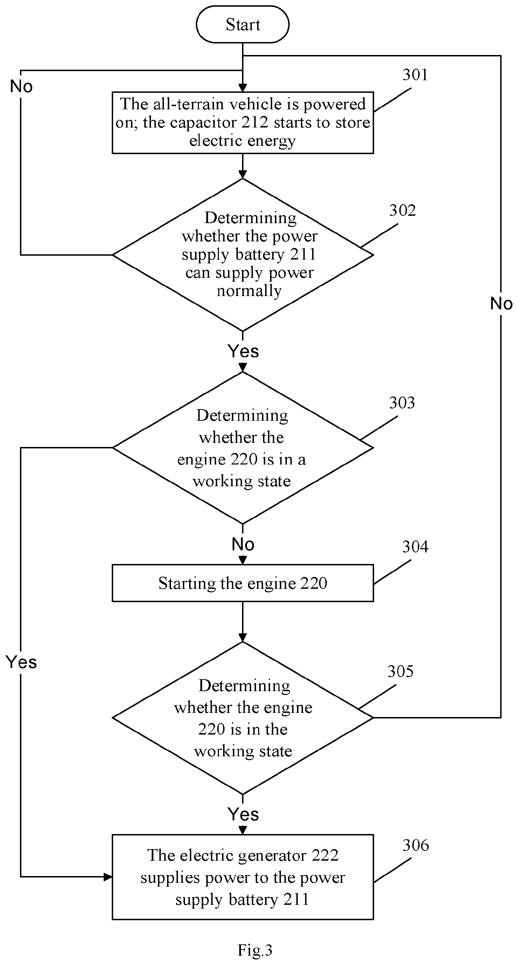

In practical applications, for example, based on the power supply system for the all-terrain vehicle shown in Fig. 2, as shown in Fig. 3, the working flow of the power supply system for the all-terrain vehicle may specifically include the following steps:

Step 301: the all-terrain vehicle is powered on; the capacitor 212 starts to store electric energy; then, step 302 is performed.

In practical applications, when the VCU 240 detects that an ignition switch of the all-terrain vehicle is turned from an OFF state to an auxiliary equipment (ACC) state, and then from the ACC state to an ON state, it may control the all-terrain vehicle to power on. After the all-terrain vehicle is powered on, since the capacitor 212 does not store electric energy in this regard, the voltage of the power supply battery 211 is higher than the voltage of the capacitor 212, causing (that is, triggering) the capacitor 212 to start storing electric energy.

Step 302: determining whether the power supply battery 211 can supply power normally; if yes, performing step 303; if not, performing step 301, that is, controlling the all-terrain vehicle to be powered on again (in this regard, failure of the power supply battery 211 to supply power normally is caused by failure of the all-terrain vehicle to power-on).

In practical applications, the VCU 240 may detect the voltage of the power supply battery 211 to determine whether the power supply battery 211 can input the power supply voltage to the corresponding device during operation (that is, when powering the corresponding device).

Step 303: determining whether the engine 220 is in a working state; if yes, performing step 306; if not, performing step 304.

Here, in practical applications, since the process of storing electric energy by the capacitor 212 is fast, the energy storage of the capacitor 212 is completed when step 303 is performed.

In practical applications, when the VCU 240 detects that the user needs to start the engine 220, it may send a start signal to the ECU 250; after receiving the start signal, the ECU 250 may determine whether the engine 220 is in the working state.

In practical applications, the VCU 240 may determine that the user needs to start the engine 220 when it detects that the user starts the engine 220. For example, the VCU 240 detects that the user presses a button or switch used to start the engine 220; of course, the VCU 240 may also determine that the user needs to start the engine 220 when it detects that the SOC of the power supply battery 211 is less than the above first threshold (that is, the electric generator 222 is required to supply power to the power supply battery 211 in this regard).

Step 304: starting the engine 220; then performing step 305.

In practical applications, the ECU 250 controls the power supply battery 211 using the VCU 240 to supply power to the starter motor 221 to start the engine 220.

In practical applications, the power supply battery 211 supplies power to the starter motor 221, which may cause the voltage of the power supply battery 211 to drop. A drop in the voltage of the power supply battery 211 triggers the capacitor 212 to release the stored electric energy, and the electric energy released by the capacitor 212 is supplemented to the power supply system of the all-terrain vehicle, so that the voltage supplied by the power supply battery 211 to the micro-control units such as the VCU 240 and the ECU 250 maintains stability.

Step 305: determining whether the engine 220 is in the working state; if yes, performing step 306; if not, performing step 301.

In practical applications, the ECU 250 may determine whether the engine 220 is in the working state; if it is determined that the engine 220 is in the working state, the engine 220 is successfully started, and the electric generator 222 starts to generate electricity; or if it is determined that the engine 220 is not in the working state, the engine 220 fails to start, and the all-terrain vehicle needs to be controlled to be powered on again.

Step 306: the electric generator 222 supplies power to the power supply battery 211.

In practical applications, when the electric generator 222 supplies power to the power supply battery 211, the voltage of the power supply battery 211 rises. When the voltage of the power supply battery 211 is higher than the voltage of the capacitor 212, the capacitor 212 is triggered to start storing electric energy.

In practical applications, the VCU 240 may send a control signal to the power supply battery 211 to control the power supply battery 211 to supply power to the high-power device 230 when it detects that the user starts the high-power device 230 (such as detecting that the user presses a button to turn on an air conditioner). In this regard, the voltage of the power supply battery 211 drops, and a drop in the voltage of the power supply battery 211 triggers the capacitor 212 to release the stored electric energy. The electric energy released by the capacitor 212 is supplemented to the power supply system of the all-terrain vehicle, so that the voltage supplied by the power supply battery 211 to the micro-control units such as the VCU 240 and the ECU 250 maintains stability. The VCU 240 may also send a control signal to the power supply battery 211 to control the power supply battery 211 to stop supplying power to the high-power device 230 when it detects that the user turns off the high-power device 230 that is running (such as detecting that the user presses a button to turn off the air conditioner).

An embodiment of the present application also provides an all-terrain vehicle, which includes: a first seat and a second seat arranged in parallel, and the above power supply system 110.

A power source 111 is arranged behind the first seat; and

An energy storage unit 112 is arranged behind the second seat.

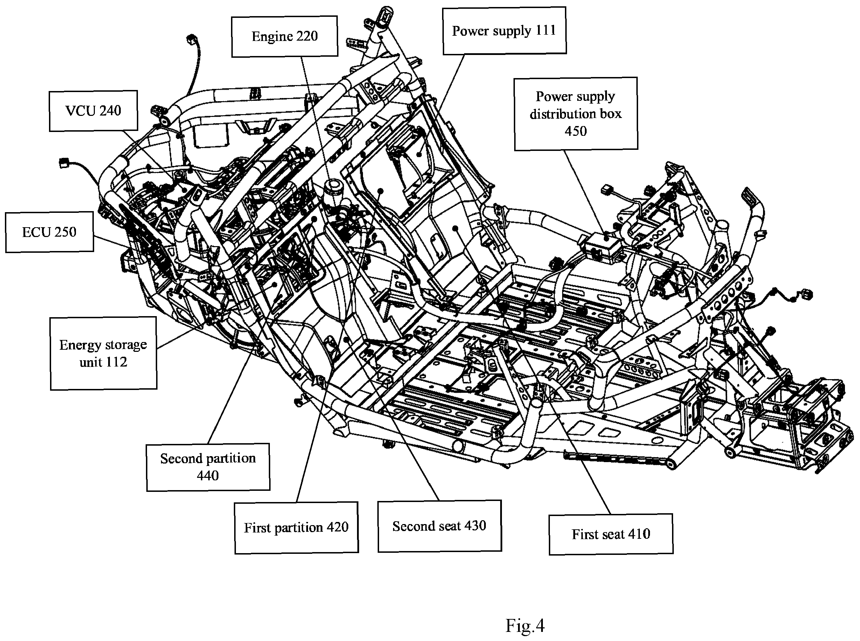

In practical applications, the specific setting positions of the power source 111 and the energy storage unit 112 may be determined according to needs. Exemplarily, as shown in Fig. 4, a first partition 420 is arranged between the rear part of the first seat 410 and the engine 220, and the power source 111 is arranged on the first partition 420; a second partition 440 is arranged between the rear part of the second seat 430 and the engine 220, and the energy storage unit 112 is arranged on the second partition 440. A vehicle head of the all-terrain vehicle may be provided with a power distribution box 450; and the VCU 240 and the ECU 250 may be arranged behind the engine 220.

In practical applications, the first seat 410 may be a driver seat; and the second seat 430 may be a passenger seat. Of course, the first seat 410 may also be a passenger seat, and in this regard, the second seat 430 may be a driver seat.

The power supply system for the all-terrain vehicle and the all-terrain vehicle provided by the embodiments of the present application have the following advantages: when the first device having high electric power of the all-terrain vehicle needs to be used, the energy storage unit supplies power to the power supply system of the all-terrain vehicle in a short time period, and the electric energy released by the energy storage unit is supplemented to the power supply system to balance the system voltage of the power supply system, thereby ensuring that the voltage supplied to the second device having the high stability requirement for the power supply voltage can maintain stability. In this way, the loss/damage of the second device of the all-terrain vehicle when powering the all-terrain vehicle may be reduced, and the service life of the second device may be prolonged, ensuring that the second device can work reliably and stably, the working efficiency of the power supply system for the all-terrain vehicle may be improved.

It should be noted that: "first", "second", etc. are used to distinguish similar objects, and are not necessarily used to describe a specific order or sequence.

In addition, the technical solution described in the embodiments of the present application may be combined arbitrarily on a non-conflict basis.

The above are only embodiments of the present application, and are not used to limit the protection scope of the present application.

## Claims

1. An all-terrain vehicle, comprising:
a frame;
at least one seat (410, 430) arranged on the frame;
a first device (120);
a second device (130), a required electric power of the first device (120) being greater than a required electric power of the second device (130), and the first device (120) having a lower stability requirement for a power supply voltage than the second device (130); and
a power supply system (110) arranged behind the at least one seat (410, 430), the power supply system (110) comprising a power source (111) and an energy storage unit (112); the power source (111) being configured to supply power to the first device (120) and the second device (130), wherein
when a voltage of the power source (111) is higher than a voltage of the energy storage unit (112), the energy storage unit (112) is triggered to store electric energy; and when the voltage of the power source (111) is lower than the voltage of the energy storage unit (112), the energy storage unit (112) is triggered to release the stored electric energy to the power source (111); and
when the power source (111) supplies power to the first device (120) and the second device (130) and a voltage of the power source (111) drops, the energy storage unit (112) is triggered to release stored electric energy to the power source (111), and the electric energy released by the energy storage unit (112) is supplied to the power source (111) to increase an output voltage of the power source (111) such that the output voltage of the power source (111) satisfies the stability requirement of the second device (130) for the power supply voltage.

2. The all-terrain vehicle according to claim 1, further comprising an electric generator (222) configured to generate electric energy; and the electric energy generated by the electric generator (222) is used to supply power to the power source (111).

3. The all-terrain vehicle according to claim 1 or 2, wherein
the energy storage unit (112) is connected in parallel with the power source (111).

4. The all-terrain vehicle according to claim 1 or 2, wherein
the energy storage unit (112) comprises a capacitor.

5. The all-terrain vehicle according to claim 1 or 2, wherein the first device (120) comprises at least one of:
a starter motor (221);
an on-board air conditioner;
an on-board audio; or
a winch motor;
wherein the starter motor (221) is configured to start an engine (220) of the all-terrain vehicle; the power source (111) is configured to supply power to the starter motor (221) when the engine (220) needs to be started; and the starter motor (221) is further configured to operate and drive the engine (220) to start after being supplied with power.

6. The all-terrain vehicle according to claim 1 or 2, wherein the second device (130) comprises at least one of:
a vehicle control unit;
an engine control unit; or
a motor control unit.

7. The all-terrain vehicle according to claim 1, wherein the at least one seat (410, 430) comprises a first seat (410) and a second seat (430) arranged in parallel; wherein
the power source (111) is arranged behind the first seat (410); and
the energy storage unit (112) is arranged behind the second seat (430).

8. The all-terrain vehicle according to claim 7, wherein
a first partition (420) is arranged between a rear part of the first seat (410) and an engine (220), and the power source (111) is arranged on the first partition (420); and
a second partition (440) is arranged between a rear part of the second seat (430) and the engine (220), and the energy storage unit (112) is arranged on the second partition (440).

9. The all-terrain vehicle according to claim 7 or 8, wherein
the first seat (410) is a driver seat; and
the second seat (430) is a passenger seat.

10. A method for supplying power to an all-terrain vehicle, the all-terrain vehicle comprising a power source and an energy storage unit, the power source being configured to supply power to a first device and a second device of the all-terrain vehicle, a required electric power of the first device being greater than a required electric power of the second device; and the first device having a lower stability requirement for a power supply voltage than the second device, wherein the method comprises :
powering on (301) the all-terrain vehicle, wherein a voltage of the power source is higher than a voltage of the energy storage unit after the all-terrain vehicle is powered on, such that the energy storage unit is triggered to store electric energy;
determining (303) whether the first device needs to be started;
controlling (306) the power source to supply power to the first device when it is determined that the first device needs to be started, wherein the voltage of the power source drops when the power source supplies power to the first device and the second device, and the drop in the voltage of the power source triggers the energy storage unit to release the stored electric energy to the power source to increase the output voltage of the power source, such that the output voltage of the power source satisfies the stability requirement of the second device for the power supply voltage.

11. The method according to claim 10, wherein the first device comprises a engine, before the determining whether the first device needs to be started, the method further comprising:
determining (330) whether the engine is in an operating state ; and
controlling (306) an electric generator of the all-terrain vehicle to supply power to the power source when it is determined that the engine is in the operating state, such that the voltage of the power source is higher than the voltage of the energy storage unit and the energy storage unit is triggered to store electric energy.

12. The method according to claim 11, wherein
the determining (303) whether the first device needs to be started, comprising:
determining whether the engine needs to be started when it is determined that the engine is not in the operating state; and
the controlling (306) the power source to supply power to the first device when it is determined that the first device needs to be started, comprising:
controlling the power source to supply power to a starter motor of the all-terrain vehicle to start the engine when it is determined that the engine needs to be started.

13. The method according to claim 10, wherein the first device comprises at least one of an on-board air conditioner, an on-board audio, or a winch motor of the all-terrain vehicle.
